# EUROPÄISCHE PATENTANMELDUNG

(11) **EP 1 122 157 A2**
(43) Veröffentlichungstag der Anmeldung: **08.08.2001**
(21) Anmeldenummer: 01101503.9
(22) Anmeldetag: 24.01.2001
(51) Int. Cl.: B62J 6/12

(54) **Schaltungsbaugruppe für eine Nabenlichtmaschine**

(30) Priorität: 28.01.2000 DE 10003627
(71) Anmelder: Wangermann, Ute Christina, 25524 Itzehoe (DE)
(72) Erfinder: Wangermann, Jochen R., Dr., 25524 Itzehoe (DE)
(74) Vertreter: Findeisen, Andreas

(57) **Zusammenfassung**

Die Erfindung betrifft eine Schaltungsbaugruppe für eine Nabenlichtmaschine mit einem, in der Nabe eingebauten Rotor-Stator-Induktionssystem zur Stromerzeugung, dessen Rotorsystem drehbar auf einer Achse des Laufrades angeordnet und mittels einer Kupplungsvorrichtung mit einem Planetengetriebe in Wirkverbindung bringbar ist, wobei die Kupplungsvorrichtung durch mindestens einen, von der Schaltungsbaugruppe beaufschlagten Stellstift betätigt wird. Es wird die Aufgabe gelöst, eine Schaltungsbaugruppe zu schaffen, die in jedem Betriebszustand eine exakte Positionierung der Stellstifte für die Kupplungsbetätigung gewährleistet, damit eine funktionssichere Verbindung bzw. Trennung von Magnetrotor und Planetengetriebe erreicht wird. Dies wird möglich, indem der Stellhebel (12) formschlüssig mit einem Stellring (10) verbunden ist und der Stellring (10) einem zu diesem beabstandeten Gegenring (11) zugeordnet ist, wobei Stellring (10) und Gegenring (11) sowohl axial als auch in Umfangsrichtung zueinander verlagerbar sind und jeweils muldenförmige Ausnehmungen (13) aufweisen, denen eine den Stellring (10) und den Gegenring (11) in Wirkverbindung bringbare Schaltkugel (14) zugeordnet ist.

## Beschreibung

Die Erfindung betrifft eine Schaltungsbaugruppe für eine Nabenlichtmaschine mit einem in der Nabe eingebauten Rotor-Stator-Induktionssystem zur Stromerzeugung, dessen Rotorsystem drehbar auf einer Achse des Laufrades angeordnet und mittels einer Kupplungsvorrichtung mit einem Planetengetriebe in Wirkverbindung bringbar ist, wobei die Kupplungsvorrichtung durch mindestens ein, von einem Stellhebel beaufschlagtes Stellmittel der Schaltungsbaugruppe betätigt wird.

Für die Stromversorgung von Fahrrädern werden überwiegend Dynamos benutzt. Der Antriebswelle des Dynamos ist ein Reibrad zugeordnet, das mit dem Reifen eines Laufrades in Wirkverbindung gebracht wird. Derartige technische Lösungen weisen allerdings mehrere Nachteile auf: Reibradantriebe haben einen ohnehin schlechten Wirkungsgrad, der im vorliegenden Anwendungsfall dem Radfahrer eine unverhältnismäßig hohe Antriebsleistung zur Stromerzeugung abfordert. Durch Verschleiß bzw. Verschmutzung von Reifenprofil und/oder Reibrad, durch falsche Montage, durch zu geringen Reifeninnendruck oder durch Witterungseinflüsse kann es bei diesem System zum völligen Ausfall der Stromerzeugung kommen. Demzufolge können insbesondere bei Einsatzbedingungen, bei denen eine ausreichende Beleuchtung des Fahrrades für die Sicherheit des Nutzers wesentlich ist (z.B. bei Regen, Schnee oder bei verschmutzter Fahrbahn im Gelände in der Dunkelheit), erhebliche Funktionsmängel auftreten.

Solche funktionellen Mängel können durch Verwendung von Nabenlichtmaschinen vermieden werden, die bereits in mehreren Ausführungen bekannt sind. Die Nabenlichtmaschine wird in eine Fahrradnabe eingebaut, die zwei Nabenflansche zur Abstützung für die Speichen der Felgenhalterung aufweist. Die Nabenlichtmaschine ist auf der Achse des Laufrades montierbar und weist einen Magnetrotor auf. Der Magnetrotor ist einer Spule derart zugeordnet, dass in der Spule durch Rotation des Magneten eine Spannung induziert wird. Die Spule ist mit einem Stromabnahmekontakt verbunden, über den die Stromversorgung, z.B. für die Fahrradbeleuchtung realisiert wird.

Mehrere Hersteller bieten am Markt eine getriebelose Variante einer Nabenlichtmaschine an. Der Stator sitzt hierbei fest auf der Achse und die Magnete sitzen fest in der Nabenhülse. Dadurch erreicht man eine einfache Bauweise, ist aber gezwungen, mit der relativ langsamen Laufraddrehzahl die erforderliche Spannung zu erzeugen, was zu einer schweren Nabe führt und keine mechanische Abschaltbarkeit ermöglicht. Wegen der begrenzten Anzahl der Magnete erhält man bei langsamer Fahrgeschwindigkeit ein flackerndes Licht. Da die Magnete auch im elektrisch abgeschalteten Zustand in der Spule eine Spannung erzeugen, die dort zu Wirbelstromverlusten führt, ergibt sich, wenn kein Strom benötigt wird, eine gewisse, mit der Fahrgeschwindigkeit steigende mehr oder weniger große Schwergängigkeit. Da viele Radfahrer überwiegend tagsüber unterwegs sind, ist dieser Nachteil nicht unerheblich.

Diese typischen Nachteile getriebeloser Nabenlichtmaschinen können durch Anwendung eines Getriebes überwunden werden. Neben dem Vorteil der Abschaltbarkeit wird auch die Beleuchtungsqualität verbessert. Das Getriebe wird insbesondere benutzt, um kleine Spulen und Magnete verwenden zu können und damit der Magnetrotor auch bei geringer Laufradgeschwindigkeit eine für die notwendige Spannungserzeugung ausreichende Drehzahl hat.

Aus EP 0 555 448 B 1 ist eine derartige Nabenlichtmaschine mit Getriebe bekannt. Bei dieser Lösung ist ein Rotor-Stator-Induktionssystem mit einem Magnetrotor und einer feststehenden Spulenanordnung innerhalb der Nabenhülse angeordnet. Der Magnetrotor wird über ein Planetengetriebe in Rotation versetzt. Der Verbindung zwischen Magnetrotor und Planetengetriebe ist eine Kupplungsvorrichtung zugeordnet. Sofern die Stromerzeugung unterbrochen werden soll, ist es möglich, die Kupplung - gegen die Kraft einer Feder - durch ein Stellglied außer Wirkeingriff zu bringen. Als Stellglied kann in besonders einfacher Weise ein Bowdenzug vorgesehen werden. Um Funktionsstörungen zu vermindern, ist allerdings die Verwendung einer separaten Schaltungsbaugruppe zweckmäßig. Diese weist beispielsweise eine Stellschraube mit Stellhebel und Stellring auf. Überwiegend wird jedoch die Schaltungsbaugruppe als Buchse mit zugeordnetem Stellhebel ausgestaltet. Die Buchse ist hierbei mit einer Kurvenscheibe in Wirkeingriff und mit dieser auf einer weiteren Buchse drehbar. Auf dieser weiteren Buchse ist ein Tragring befestigt, in dem über dem Umfang verteilt Stifte angeordnet sind, die parallel zur Achse des Laufrades verschoben werden können. Diese Stifte liegen sowohl an der Kurvenscheibe an als auch an der Kupplung. Durch Verstellung der Kurvenscheibe verändert sich folglich die Position der Stifte und somit wird es möglich, die Kupplung von der Kupplungsscheibe zu lösen oder aber an dieser zur Anlage zu bringen. Somit kann die Nabenlichtmaschine der EP 0 555 448 B 1 in Betriebssituationen, in denen keine Stromerzeugung notwendig ist, ausgeschalten werden.

Diese technische Lösung hat sich grundsätzlich bewährt. Allerdings wäre es wünschenswert, die Schaltkräfte zu vermindern, um z.B. eine Schaltung der Nabenlichtmaschine durch Frauen und Kinder zu erleichtern. Daneben wäre es vorteilhaft, wenn die Kunststoffnasen des Schalthebels entlastet werden könnten und die Schaltmechanik somit robuster gegen Fehlbedienung wäre. Außerdem sollte die bisher bekannte technische Lösung weiterentwickelt werden, um eine einfache Fernbedienung während der Fahrt vom Lenker aus zu realisieren.

Aufgabe der Erfindung ist es, eine Schaltungsbaugruppe für Nabenlichtmaschinen zu schaffen, die in jedem Betriebszustand eine exakte Positionierung der Stellstifte für die Kupplungsbetätigung gewährleistet, damit eine funktionssichere Verbindung bzw. Trennung von Magnetrotor und Planetengetriebe erreicht wird.

Diese Aufgabe wird gelöst, indem der Stellhebel formschlüssig mit einem Stellring verbunden ist und der Stellring einem zu diesem beabstandeten Gegenring zugeordnet ist, wobei Stellring und Gegenring sowohl axial als auch in Umfangsrichtung zueinander verlagerbar sind und jeweils muldenförmige Ausnehmungen aufweisen, denen eine den Stellring und den Gegenring in Wirkverbindung bringbare Schaltkugel zugeordnet ist. Vorteilhafte Ausgestaltungen sind in den Ansprüchen 2. bis 11. beschrieben.

Die vorgeschlagene Schaltungsbaugruppe gewährleistet in jedem Betriebszustand eine funktionssichere Verbindung bzw. Trennung von Magnetrotor und Planetengetriebe. Es wird erreicht, dass die Nabenlichtmaschine nicht nur elektrisch, sondern auch mechanisch vollständig abgeschalten werden kann. Demzufolge gibt es bei dieser extrem belastbaren, auf hochwertigen Rillenkugellagern laufenden Nabenlichtmaschine durch den Stromerzeugungsteil keinerlei zusätzlichen Rollwiderstand, sobald die Stromerzeugung ausgeschalten ist. Dieser Vorteil ist durch eine getriebelose Nabenlichtmaschine nicht erreichbar, aber für Radfahrer von großem Vorteil, die nicht regelmäßig mit eingeschalteter Stromerzeugung fahren wollen. Gleichzeitig wird die Robustheit der Anbauteile erhöht und insgesamt eine höhere Herstellungs- und Montagepräzision erreicht.

Ein Ausführungsbeispiel der Erfindung ist in der Zeichnung dargestellt und wird nachfolgend beschrieben. Es zeigen:
- Fig. 1: den grundsätzlichen Aufbau einer Nabenlichtmaschine mit einer erfindungsgemäßen Schaltungsbaugruppe
- Fig. 2: die Schaltungsbaugruppe in Detaildarstellung in zwei unterschiedlichen Schaltpositionen

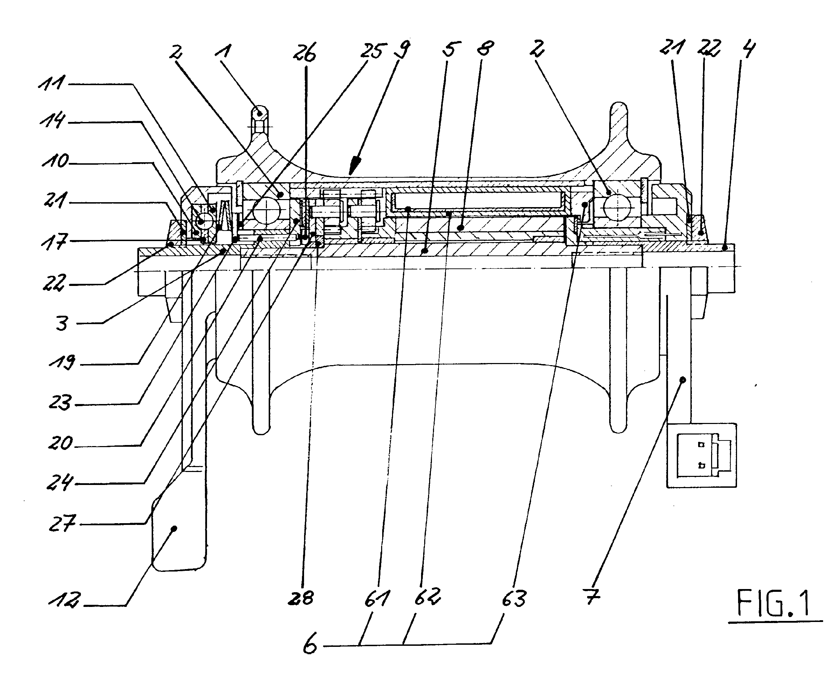

Die in Fig. 1 gezeigte Nabenlichtmaschine ist für den Einbau in eine Nabe eines Laufrades eines Fahrrades geeignet. Aus Gründen der Übersichtlichkeit wird auf die Darstellung der Speichen und sonstigen Baugruppen des Fahrrades jedoch verzichtet. In einer Nabenhülse 1, die vorzugsweise aus einer hochwertigen Aluminiumlegierung besteht, sind zwei Rillenkugellager 2 eingepreßt. Die Innenringe der Kugellager 2 laufen auf einer Kupplungsbuchse 3 und auf einer Stekkerbuchse 4. Die beiden Buchsen 3 und 4 sind durch eine Achse 5 verbunden, die als Hohlachse 5 ausgestaltet ist. Die Steckerbuchse 4 trägt das Festlager und die Kupplungsbuchse 3 das Loslager, um temperaturbedingte Längenänderungen der Hohlachse 5 gegenüber der Nabenhülse 1 auszugleichen.

Die Nabenhülse 1 ist drehfest mit einem Statorsystem 6 verbunden, das aus einem Spulenkörper 61, mehreren Polfingern 62 sowie einem Gleitring 63 besteht. Das Statorsystem 6 steht mit einem Steckerarm 7 in Wirkverbindung, der an der Steckerbuchse 4 abgestützt ist. Das Rotorsystem besteht aus einem Ringmagnet 8, der drehbar auf der Hohlachse 5 angeordnet ist. Im vorliegenden Sachverhalt sind der konkrete Aufbau sowie die konkrete Funktionsweise der Bauteile zur Stromerzeugung unerheblich, so dass auf nähere Erläuterungen verzichtet werden kann. Auch die konkrete Konstruktion des Planetengetriebes 9 ist hier unerheblich. Es ist lediglich anzumerken, dass in Fig. 1 ein zweistufiges Getriebe dargestellt ist, das z.B. auch dreistufig bzw. anders ausgeführt werden könnte, um die notwendigen Drehzahlen für die Induzierung einer Spannung zu erreichen. Wesentlich für die vorliegende technische Lösung ist in jedem Fall die Art und Weise, mit der die Verbindung zwischen dem Ringmagnet 8 und dem Planetengetriebe 9 hergestellt und gelöst werden kann.

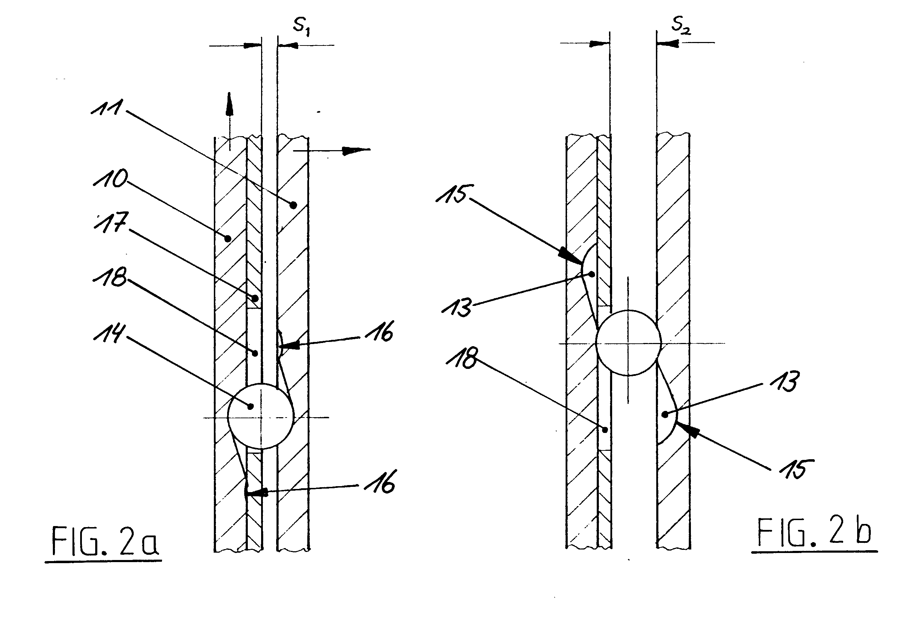

Die erfindungsgemäße Schaltungsbaugruppe besteht aus einem Stellring 10 und einem Gegenring 11. Der Stellring 10 ist mit einem Stellhebel 12 verbunden. Zwischen Stellring 10 und Gegenring 11 verbleibt gemäß Fig. 2 in Einbaulage ein Abstand "s₁" bzw. "s₂". Stellring 10 und Gegenring 11 sind sowohl axial als auch in Umfangsrichtung zueinander verlagerbar. Hierbei ist der Stellring 10 axial fixiert und nur in Umfangsrichtung bewegbar. Hingegen ist der Gegenring 11 in Umfangsrichtung fixiert und nur axial bewegbar.

Stellring 10 und Gegenring 11 weisen jeweils muldenförmige Ausnehmungen 13 auf, die aus Fig. 2 ersichtlich sind. Den Ausnehmungen werden Schaltkugeln 14 zugeordnet, so dass eine Wirkverbindung zwischen Stellring 10 und Gegenring 11 besteht. Die muldenförmigen Ausnehmungen 13 haben jeweils eine Kontur, die ausgehend von der ebenen Fläche zunächst bis zu einem Scheitelpunkt 15 sanft abfallend und nach dem Scheitelpunkt 15 stark ansteigend ausgestaltet ist. In Einbaulage sind Stellring 10 und Gegenring 11 so angeordnet, dass die Konturen der muldenförmigen Ausnehmungen 13 gegensinnig zueinander verlaufen.

Zwischen Stellring 10 und Gegenring 11 ist eine gegen Verdrehen gesicherte Distanzscheibe 17 angeordnet. In der Distanzscheibe 17 ist ein Durchbruch 18 vorgesehen, der den Weg der jeweils zugeordneten Schaltkugel 14 begrenzt. Der Durchbruch 18 kann beispielsweise als Langloch ausgestaltet werden, in dem die Schaltkugel 14 läuft. Der Schaltweg des Stellhebels 12 kann unterschiedlich begrenzt werden.

Bei Verringerung des Schalthebelweges ist es möglich, dass die Schaltkugeln 14 nur im Bereich der muldenförmigen Ausnehmungen 13 verlagerbar sind, jedoch nicht bis in den Bereich der sich anschließenden ebenen Flächen von Stellring 10 und Gegenring 11. Bei dieser Ausgestaltung ist also kein oberer Rastpunkt für die Schaltkugeln 14 vorhanden. Demzufolge kann eine Fernbedienung während der Fahrt vom Lenker aus realisiert werden, wobei der mit dem Stellring 10 verbundene Stellhebel 12 über einen Zug im eingeschalteten Zustand festgehalten werden muß. Wird dieser Stellhebel 12 losgelassen, dann wird der Stellring 10 mittels Federkraft in Richtung des Gegenrings 11 verschoben und die Schaltkugeln 14 rollen wieder zum Scheitelpunkt 15 der muldenförmigen Ausnehmungen 13. Somit wird die Kupplung getrennt. Das gleiche Ergebnis wird erzielt, wenn man den möglichen Weg des Stellhebels 12 unverändert läßt, aber im Stellring 10 und im Gegenring 11 Näpfchen ohne oberen Rastpunkt und mit flacher ansteigenden Einprägungen verwendet.

Alternativ ist es möglich, dass die Schaltkugeln 14 bis in den Bereich der sich den muldenförmigen Ausnehmungen 13 anschließenden ebenen Flächen von Stellring 10 und Gegenring 11 verlagerbar sind. Bei dieser Ausgestaltung sind im Stellring 10 und im Gegenring 11 jeweils näpfchenförmige Vertiefungen 16 vorgesehen. Die Vertiefungen 16 sind unmittelbar im Bereich des Übergangs von der ebenen Fläche zur sanft abfallenden Kontur angeordnet und wirken als oberer Rastpunkt für die Schaltkugeln 14.

Der Gegenring 11 steht mit seiner Seitenfläche, die der Distanzscheibe 17 entgegengesetzt ist, hier mit zwei Tellerfedern 19 in Wirkverbindung. Diese Tellerfedern 19, die so zusammenwirken, dass die Federkraft konstant bleibt und sich der Federweg erhöht, stehen wiederum mit ihrer Seitenfläche, die dem Gegenring 11 entgegengesetzt ist, über die Übertragungsscheibe 23 mit mindestens einem Stellstift 20 in Wirkverbindung. Mit dem Stellstift 20 wird die eigentliche Kupplungsvorrichtung betätigt.

Der Stellring 10, die Distanzscheibe 17 und der Gegenring 11 sind auf der Kupplungsbuchse 3 abgestützt. Die Kupplungsbuchse 3 weist mindestens eine axiale Bohrung oder Nut zur Führung des Stellstiftes 20 auf. Auf der Kupplungsbuchse 3 sind axiale Nuten vorgesehen, in die Verdrehsicherungen der Scheiben eingreifen können. Außerdem sind an der Kupplungsbuchse 3 zwei Absätze vorhanden, die zur Anlage einer Abschlußscheibe 21 und der Distanzscheibe 17 dienen. Die Abschlußscheibe 21 wird durch eine Abschlußmutter 22 geklemmt. Zwischen der Abschlußscheibe 21 und der Distanzscheibe 17 entsteht ein definierter Abstand, in dem der Stellhebel 12 mit dem formschlüssig verbundenen Stellring 10 drehbar geführt wird. Somit wird die Distanzscheibe 17 axial fixiert, die an ihrer Innenbohrung Laschen hat, die in die Nuten der Kupplungsbuchse 3 eingreifen und sie gegen Verdrehen sichern. Am Außendurchmesser hat die Distanzscheibe 17 Ausnehmungen, in die Teile des Stellhebels 12 hineinragen, um den Schaltwinkel des Stellhebels 12 zu begrenzen. Der Gegenring 11 und die Übertragungsscheibe 23 haben an ihrer Innenbohrung Laschen, die in die Nuten der Kupplungsbuchse 3 eingreifen und dafür sorgen, dass nur eine axiale Verschiebbarkeit möglich ist. An den in die Nuten hineinragenden Teilen der Übertragungsscheibe 23 liegen die Stellstifte 20 an, welche die Kupplungsscheibe 24 axial verschieben können.

Um die Wirkungsweise der Schaltungsbaugruppe deutlich zu machen, wird in Fig. 2 eine Zylinderfläche um die Mittellinie der Kupplungsbuchse 3, die durch die Schaltkugel 14 hindurch geht, abgewikkelt und in zwei Stellungen (Fig. 2a / Fig. 2b) dargestellt. Diese Fläche schneidet sowohl auf dem Stellring 10 als auch auf dem Gegenring 11 die muldenförmigen Ausnehmungen 13 für die Aufnahme der Schaltkugel 14.

### Stellung 1 (Fig. 2a):

Die Schaltkugel 14 liegt sowohl beim Stellring 10 als auch beim Gegenring 11 im Bereich des Scheitelpunktes 15, also im tiefen Teil der muldenförmigen Ausnehmung 13. Stellring 10 und Gegenring 11 haben in dieser Lage einen minimalen Abstand "s₁". Die Tellerfedern 19 sind nahezu entspannt, wobei aber durch eine Kugellagerausgleichsscheibe 25 eine geringe Vorspannung erhalten bleibt. Eine weitere Kugellagerausgleichsscheibe 26 sorgt dafür, dass die Kupplungsscheibe 24 vom Belag der Druckscheibe 27 weggedrückt wird und der Stellstift 20 an der Übertragungsscheibe 23 anliegt.

### Stellung 2 (Fig.2b):

Wird nun der Stellhebel 12 mit dem formschlüssig eingelegten Stellring 10 in Umfangsrichtung bewegt, so rollt die Schaltkugel 14 bei schlupflosem Betrieb mit hierzu halber Geschwindigkeit in weniger tiefe Abschnitte der muldenförmigen Ausnehmungen 13 und verschiebt dabei den Gegenring 11 axial. Demzufolge wird ein zusätzlicher Abstand "s = s₂ - s₁" erreicht, sobald die Schaltkugel 14 die obere Lage erreicht hat. Diese obere Lage der Schaltkugel 14 kann - wie in der Zeichnung dargestellt - als stabile Lage mit einer näpfchenförmigen Vertiefung 16 ausgebildet sein. Ebenso ist es möglich, diese Lage auf der schiefen Ebene der muldenförmigen Ausnehmung 13 vorzusehen. Hierbei muß der Stellhebel 12 in der oberen Lage, z.B. über einen Zug, am Zurückrollen gehindert werden, falls Strom erzeugt werden soll.

Sobald die Schaltkugel 14 die obere Lage erreicht, werden die Tellerfedern 19 um das Maß "s" zusammengedrückt, deren definierte Kraft über die Übertragungsscheibe 23 und die Stellstifte 20 auf die Kupplungsscheibe 24 wirkt. Die Kupplungsscheibe 24 hindert über die Druckscheibe 27 die erste Stufe des Planetengetriebes 9 mit einem definierten Drehmoment, sich in Umfangsrichtung zu bewegen. Wird dieses Drehmoment überschritten, dann rutscht die Kupplung durch. In diesem Fall wirkt die Kupplung als Überlastungssicherung und baut so z.B. von Massenkräften herrührende Spannungsspitzen ab, die bei schnellen Drehzahländerungen auftreten können. Die Druckscheibe 27 stützt sich dabei an einem Druckstück 28 ab. Dadurch wird der hier als Ringmagnet 8 ausgebildete Magnetrotor über das Planetengetriebe 9 in Drehung versetzt und induziert im Statorsystem 6 einen elektrischen Strom. Erwähnt werden soll noch, dass bei der vorgeschlagenen Schaltungsbaugruppe ein axialer Arbeitsbereich der Kupplungsscheibe 24 mit wenigen Zehntel "mm" möglich wird.

Wird ein Laufrad, das mit der vorgeschlagenen Nabenlichtmaschine ausgerüstet ist, in die Vorderradgabel eines Fahrrades eingebaut, so liegen die Ausfallenden der Gabel an den Abschlußmuttern 22 an. Die Fixierung kann durch handelsübliche Schnellspanner oder Innensechskant-Schraubachsen erfolgen. Weiterhin sind handelsübliche Diebstahlsicherungssysteme einsetzbar. Ein in der Hohlachse 5 ausgestaltetes Gewinde kann ebenfalls zur Fixierung in der Gabel durch Innensechskantschrauben mit entsprechenden Unterlegteilen genutzt werden. Ein solches Gewinde ist außerdem als Montagehilfe geeignet.

Neben verschiedenen, bereits dargelegten Vorteilen ergibt sich durch Anwendung der vorgeschlagenen technischen Lösung die Möglichkeit, den Einschub der Nabenlichtmaschine im Bedarfsfall vor Ort durch einen qualifizierten Fahrradmechaniker auszutauschen. Hierzu werden die Abschlußmuttern 22 gelöst sowie der Steckerarm 7, der Stellhebel 12 und die losen Schaltteile entfernt. An der Steckerarmseite wird nun das zugeordnete Rillenkugellager 2 aus seiner Preßpassung gedrückt und die gesamte Einschubbaugruppe kann mit einem Werkzeug herausgedrückt und nachfolgend ersetzt werden.

### Aufstellung der Bezugszeichen:

- 1: Nabenhülse
- 2: Rillenkugellager
- 3: Kupplungsbuchse
- 4: Steckerbuchse
- 5: Hohlachse
- 6: Statorsystem
- 61: Spulenkörper
- 62: Polfinger
- 63: Gleitring
- 7: Steckerarm
- 8: Ringmagnet
- 9: Planetengetriebe
- 10: Stellring
- 11: Gegenring
- 12: Stellhebel
- 13: muldenförmige Ausnehmung
- 14: Schaltkugel
- 15: Scheitelpunkt
- 16: näpfchenförmige Vertiefung
- 17: Distanzscheibe
- 18: Durchbruch
- 19: Tellerfeder
- 20: Stellstift
- 21: Abschlußscheibe
- 22: Abschlußmutter
- 23: Übertragungsscheibe
- 24: Kupplungsscheibe
- 25: Kugellagerausgleichsscheibe
- 26: Kugellagerausgleichsscheibe
- 27: Druckscheibe
- 28: Druckstück

- "s₁": Abstand
- "s₂": Abstand

## Patentansprüche

1. Schaltungsbaugruppe für eine Nabenlichtmaschine mit einem in der Nabe eingebauten Rotor-Stator-Induktionssystem zur Stromerzeugung, dessen Rotorsystem drehbar auf einer Achse des Laufrades angeordnet und mittels einer Kupplungsvorrichtung mit einem Planetengetriebe in Wirkverbindung bringbar ist, wobei die Kupplungsvorrichtung durch mindestens ein, von einem Stellhebel beaufschlagtes Stellmittel der Schaltungsbaugruppe betätigt wird,
dadurch gekennzeichnet,
dass der Stellhebel (12) formschlüssig mit einem Stellring (10) verbunden ist und der Stellring (10) einem zu diesem beabstandeten Gegenring (11) zugeordnet ist, wobei Stellring (10) und Gegenring (11) sowohl axial als auch in Umfangsrichtung zueinander verlagerbar sind und jeweils muldenförmige Ausnehmungen (13) aufweisen, denen eine den Stellring (10) und den Gegenring (11) in Wirkverbindung bringbare Schaltkugel (14) zugeordnet ist.

2. Schaltungsbaugruppe nach Anspruch 1,
dadurch gekennzeichnet,
dass zwischen Stellring (10) und Gegenring (11) eine Distanzscheibe (17) angeordnet ist, die einen, den Weg der Schaltkugel (14) begrenzenden Durchbruch (18) aufweist und durch die äußere Kontur die Drehwinkeldistanz des Stellhebels (12) begrenzt.

3. Schaltungsbaugruppe nach den Ansprüchen 1 und 2,
dadurch gekennzeichnet,
dass der Gegenring (11) mit seiner, der Distanzscheibe (17) entgegengesetzten Seitenfläche mit mindestens einer Tellerfeder (19) in Wirkverbindung steht, die mit ihrer, dem Gegenring (11) entgegengesetzten Seitenfläche über die Übertragungsscheibe (23) mit mindestens einem, die Kupplungsvorrichtung betätigenden Stellstift (20) in Wirkverbindung steht.

4. Schaltungsbaugruppe nach den Ansprüchen 1 und 2,
dadurch gekennzeichnet,
dass Stellring (10), Distanzscheibe (17) und Gegenring (11) auf einer Kupplungsbuchse (3) abgestützt sind, die mindestens eine axiale Bohrung oder Nut zur Führung des, die Kupplungsvorrichtung betätigenden Stellstiftes (20) aufweist.

5. Schaltungsbaugruppe nach Anspruch 1,
dadurch gekennzeichnet,
dass die muldenförmigen Ausnehmungen (13) im Stellring (10) und im Gegenring (11) jeweils eine Kontur aufweisen, die ausgehend von der ebenen Fläche zunächst bis zu einem Scheitelpunkt (15) sanft abfallend und nach dem Scheitelpunkt (15) stark ansteigend ausgestaltet ist.

6. Schaltungsbaugruppe nach den Ansprüchen 1 und 5,
dadurch gekennzeichnet,
dass die Konturen der muldenförmigen Ausnehmungen (13) im Stellring (10) und im Gegenring (11) gegensinnig zueinander verlaufend angeordnet sind.

7. Schaltungsbaugruppe nach den Ansprüchen 1 und 5,
dadurch gekennzeichnet,
dass die Schaltkugeln (14) nur im Bereich der muldenförmigen Ausnehmungen (13) verlagerbar sind, jedoch nicht bis in den Bereich der sich den muldenförmigen Ausnehmungen (13) anschließenden ebenen Flächen von Stellring (10) und Gegenring (11).

8. Schaltungsbaugruppe nach den Ansprüchen 1 und 5,
dadurch gekennzeichnet,
dass die Schaltkugeln (14) bis in den Bereich der sich den muldenförmigen Ausnehmungen (13) anschließenden ebenen Flächen von Stellring (10) und Gegenring (11) verlagerbar sind.

9. Schaltungsbaugruppe nach den Ansprüchen 1, 5 und 8
dadurch gekennzeichnet,
dass im Stellring (10) und im Gegenring (11) jeweils eine näpfchenförmige Vertiefung (16) ausgestaltet ist, die unmittelbar im Bereich des Übergangs von der ebenen Fläche zur sanft abfallenden Kontur angeordnet ist.

10. Schaltungsbaugruppe nach Anspruch 1,
dadurch gekennzeichnet,
dass der Stellring (10) axial fixiert und nur in Umfangsrichtung bewegbar ist.

11. Schaltungsbaugruppe nach Anspruch 1,
dadurch gekennzeichnet,
dass der Gegenring (11) in Umfangsrichtung fixiert und nur axial bewegbar ist.
